# FASCICULE DE BREVET EUROPEEN

(11) **EP 1 372 120 B1**
(45) Date de publication et mention de la délivrance du brevet: **28.11.2007**
(21) Numéro de dépôt: 03354058.4
(22) Date de dépôt: 12.06.2003
(51) Int. Cl.: G07F 7/10, H04L 9/32

(54) **Authentification d'une étiquette éléctronique**
Authentifizierung eines elektronischen Etiketts
Authentification of electronic ticket

(30) Priorité: 13.06.2002 FR 0207298
(43) Date de publication de la demande: 17.12.2003
(73) Titulaire: STMicroelectronics S.A., 92120 Montrouge (FR)
(72) Inventeur: Moreaux, Christophe, 13510 Eguilles (FR); Anguille, Claude, 13090 Aix En Provence (FR)
(74) Mandataire: de Beaumont, Michel

(56) Documents cités:
- EP-A- 0 032 193
- WO-A-97/42610
- FR-A- 2 796 788

## Description

La présente invention concerne de façon générale les systèmes d'authentification d'un circuit intégré porté par un élément distant (par exemple une étiquette électronique à poser sur un produit quelconque). L'invention concerne plus particulièrement les systèmes qui requièrent, pour une authentification, trois éléments distincts à savoir le circuit intégré à authentifier, un lecteur d'informations contenues dans ce circuit, et un serveur communiquant avec le lecteur.

Un exemple d'application de la présente invention concerne le marquage par étiquette radio fréquence (TAG) de consommables de systèmes de distribution. Par exemple, il peut s'agir de recharges d'une "machine à café" ou de cartouches d'imprimante. L'authentification sert alors à garantir que seules les cartouches autorisées par le fabriquant soient utilisées par une imprimante donnée. Dans une telle application, le circuit intégré à authentifier est porté par la cartouche d'imprimante sous la forme d'une étiquette électronique susceptible de communiquer, sans contact et sans fil, avec un lecteur, à la manière d'un transpondeur électromagnétique. Le lecteur est relié au serveur au moyen d'une liaison d'un autre type, par exemple, une interface électrique de type I2C ou analogue.

On désignera par la suite par "application", l'ensemble des tâches effectuées par le système (par exemple, l'imprimante) une fois l'étiquette authentifiée.

Pour que l'application fonctionne correctement, l'étiquette électronique doit avoir au préalable été authentifiée afin de s'assurer que le produit (par exemple, une cartouche ou une recharge) qui la porte est un produit autorisé (par exemple, s'assurer que la marchandise marquée par l'étiquette n'a pas été remplacée par une contrefaçon).

Le rôle du serveur (constitué par exemple d'un microcontrôleur, d'un ordinateur distant ou de tout autre système électronique adapté) est de contrôler l'application, c'est-à-dire le programme d'authentification ainsi que les actions appropriées suite à la détection (par exemple, blocage de l'imprimante ou de la machine à café en cas d'absence d'authentification). Dans ces domaines, le serveur sera préférentiellement un microcontrôleur équipant la machine de distribution automatique ou l'imprimante. Il pourra toutefois également s'agir d'un serveur distant communiquant, par exemple par liaison téléphonique ou par ligne dédiée, avec différents lecteurs.

La communication entre le serveur et le lecteur est basée sur des protocoles accessibles et répandus afin de permettre une utilisation de lecteurs différents avec un même serveur équipé du contrôleur d'application. Toutefois, cela engendre une faiblesse en terme de sécurité, surtout si le serveur est distant du lecteur (même faiblement en étant dans le même appareil). Or c'est au serveur qu'appartient la décision finale d'authentifier l'étiquette pour autoriser l'exécution correcte de l'application.

Les systèmes d'authentification connus font appel à des algorithmes de cryptographie pour authentifier une étiquette électronique à partir d'une clé secrète spécifique. Par exemple, on a recours à des algorithmes de type DES (Data Encryptions Standard).

Un inconvénient de tels algorithmes de cryptographie est qu'ils requièrent une étiquette électronique pourvue de moyens de calcul performants, en l'espèce, généralement un microprocesseur. Le coût engendré par de tels moyens de calcul rend ces systèmes mal adaptés à des recharges ou marchandises de type consommable pour lesquelles on souhaite minimiser le coût de l'étiquette électronique en raison du fait que celle-ci n'est pas durable.

La présente invention sera décrite par la suite en relation avec un exemple particulier de transmission radiofréquence entre le circuit intégré à authentifier et son lecteur. On notera toutefois qu'elle s'applique plus généralement à tout système d'authentification faisant intervenir trois éléments distincts (une étiquette électronique à authentifier, un lecteur et un serveur) et où la communication entre le lecteur et le serveur s'effectue par des moyens différents de la communication entre l'étiquette et le lecteur.

La présente invention vise à proposer un nouveau procédé et système d'authentification d'un dispositif électronique dans un système comprenant au moins ce dispositif à authentifier, un lecteur du dispositif et un serveur chargé de contrôler l'exécution d'une application en fonction de l'authentification du dispositif.

L'invention vise plus particulièrement à proposer une solution adaptée à des étiquettes électroniques ou analogues de faible taille et coût, en particulier, sans nécessiter le recours à un microprocesseur dans l'étiquette.

L'invention vise également à permettre une authentification alors que la communication entre le lecteur et le serveur s'effectue sur une liaison non protégée contre d'éventuels piratages.

Selon un premier aspect, l'invention prévoit des étiquettes électroniques ayant toutes une même clé secrète pour des étiquettes de même type.

Selon un deuxième aspect, l'invention prévoit d'individualiser la clé secrète au niveau de chaque étiquette électronique.

Pour atteindre ces objets et d'autres, la présente invention prévoit un procédé d'authentification d'une étiquette électronique par un serveur communiquant avec cette étiquette par l'intermédiaire d'un lecteur, consistant :
à calculer, côté étiquette, une première signature numérique à l'aide d'au moins une première fonction partagée par l'étiquette et le lecteur, en prenant en compte au moins une première clé secrète connue seulement de l'étiquette électronique et du lecteur ;
à transmettre la première signature au lecteur ;
à calculer, côté lecteur, une deuxième signature numérique à l'aide d'au moins une deuxième fonction, différente de la première fonction et partagée par le lecteur et le serveur, en tenant compte de la première signature ;
à transmettre la deuxième signature au serveur ; et
à vérifier, côté serveur, la cohérence entre la deuxième signature et une grandeur de validation calculée à partir de ladite deuxième fonction et d'une deuxième clé secrète connue du serveur et d'un seul élément choisi parmi l'étiquette et le lecteur.

Selon un mode de mise en oeuvre de la présente invention, la deuxième clé secrète est connue seulement du lecteur et du serveur, cette deuxième clé étant prise en compte dans le calcul, par le lecteur, de la deuxième signature transmise au serveur.

Selon un mode de mise en oeuvre de la présente invention, la deuxième clé secrète est connue seulement de l'étiquette électronique et du serveur et est mémorisée dans l'étiquette lors d'une première utilisation associée au serveur.

Selon un mode de mise en oeuvre de la présente invention, on utilise, pour les calculs de la deuxième signature et de la grandeur de validation, une troisième clé connue seulement du lecteur et du serveur.

Selon un mode de mise en oeuvre de la présente invention, le procédé d'authentification comprend les étapes successives suivantes :
extraire de l'étiquette électronique des données à transmettre au serveur ;
transmettre ces données au serveur par l'intermédiaire du lecteur, en mémorisant ces données côté serveur et côté lecteur ;
générer, côté serveur, un nombre aléatoire ou pseudoaléatoire, et le transmettre à l'étiquette par l'intermédiaire du lecteur, en mémorisant ce nombre côté serveur, côté lecteur et côté étiquette ;
calculer, côté étiquette électronique, une signature intermédiaire par application de ladite première fonction avec comme opérandes ledit nombre, lesdites données et ladite première clé secrète ; et
côté lecteur, calculer une grandeur intermédiaire par application de la première fonction avec comme opérandes ledit nombre, lesdites données et ladite première clé secrète.

Selon un mode de mise en oeuvre de la présente invention, ladite grandeur intermédiaire constitue ladite première signature, et le procédé comporte, côté lecteur, les étapes suivantes :
comparer ladite première signature à ladite grandeur intermédiaire calculée par le lecteur ; et
calculer ladite deuxième signature en prenant en compte ledit nombre, lesdites données, ladite deuxième clé secrète et le résultat de la comparaison précédente.

Selon un mode de mise en oeuvre de la présente invention, le calcul de la deuxième signature consiste à utiliser la deuxième fonction ou une troisième fonction selon le résultat de ladite comparaison.

Selon un mode de mise en oeuvre de la présente invention, le calcul de la deuxième signature consiste à utiliser la deuxième fonction avec comme opérandes ledit nombre, lesdites données, ladite deuxième clé secrète et le résultat de ladite comparaison.

Selon un mode de mise en oeuvre de la présente invention, le procédé comporte les étapes suivantes :
côté étiquette électronique, calculer une première combinaison de type OU-Exclusif de ladite signature intermédiaire avec ladite deuxième clé secrète, pour obtenir ladite première signature à transmettre au lecteur ; et
côté lecteur :
   calculer une deuxième combinaison de type OU-Exclusif de la première signature reçue avec ladite grandeur intermédiaire ; et
   calculer ladite deuxième signature par application de ladite deuxième fonction avec comme opérandes le résultat de la deuxième combinaison, ledit nombre et lesdites données.

Selon un mode de mise en oeuvre de la présente invention, ladite deuxième fonction est une fonction de génération d'un nombre pseudoaléatoire, commune au lecteur et au serveur.

Selon un mode de mise en oeuvre de la présente invention, ladite fonction de génération pseudoaléatoire utilise comme graines lesdites données, ledit nombre et, respectivement côté lecteur et côté serveur, ladite deuxième combinaison de type OU-Exclusif et ladite deuxième clé secrète.

Selon un mode de mise en oeuvre de la présente invention, ladite étiquette électronique est un transpondeur électromagnétique.

L'invention prévoit également une étiquette électronique, comportant un circuit intégré et des moyens de mémorisation d'une première clé secrète et d'exécution d'une première fonction algorithmique.

L'invention prévoit également un lecteur d'étiquette électronique.

Selon un mode de réalisation de la présente invention, le lecteur comporte un générateur pseudoaléatoire propre à fournir ladite deuxième signature.

L'invention prévoit en outre un microcontrôleur d'authentification d'une étiquette électronique.

Selon un mode de réalisation de la présente invention, le microcontrôleur comporte un générateur pseudoaléatoire propre à fournir ladite grandeur de validation.

Ces objets, caractéristiques et avantages, ainsi que d'autres de la présente invention seront exposés en détail dans la description suivante de modes de mise en oeuvre et de réalisation particuliers, faite à titre non-limitatif en relation avec les figures jointes parmi lesquelles :
la figure 1 représente, de façon très schématique et sous forme de blocs, un système exploitant une étiquette électronique selon un mode de réalisation du premier aspect de l'invention
la figure 2 est un organigramme d'un mode de mise en oeuvre de l'invention selon son premier aspect ;
la figure 3 représente, de façon très schématique et sous forme de blocs, un système exploitant une étiquette électronique selon un mode de réalisation du deuxième aspect de l'invention
la figure 4 est un organigramme partiel illustrant un mode de mise en oeuvre de l'invention selon son deuxième aspect ; et
la figure 5 représente, de façon très schématique et sous forme de blocs, un mode de réalisation d'un système selon l'invention pour la mise en oeuvre d'une fonction préférée d'authentification.

Les mêmes éléments du système et étape du procédé ont été désignés par les mêmes références aux différentes figures. Pour des raisons de clarté, seuls les étapes de procédé et les constituants du système qui sont nécessaires à la compréhension de l'invention ont été représentés aux figures et seront décrits par la suite. En particulier, les moyens utilisés pour effectuer les transmissions proprement dites entre le circuit intégré de l'étiquette et son lecteur et entre le lecteur et le serveur n'ont pas été détaillés et ne font pas l'objet de la présente invention. Celle-ci s'applique quel que soit le protocole de transmission utilisé pour véhiculer les données et informations mises en oeuvre par l'invention.

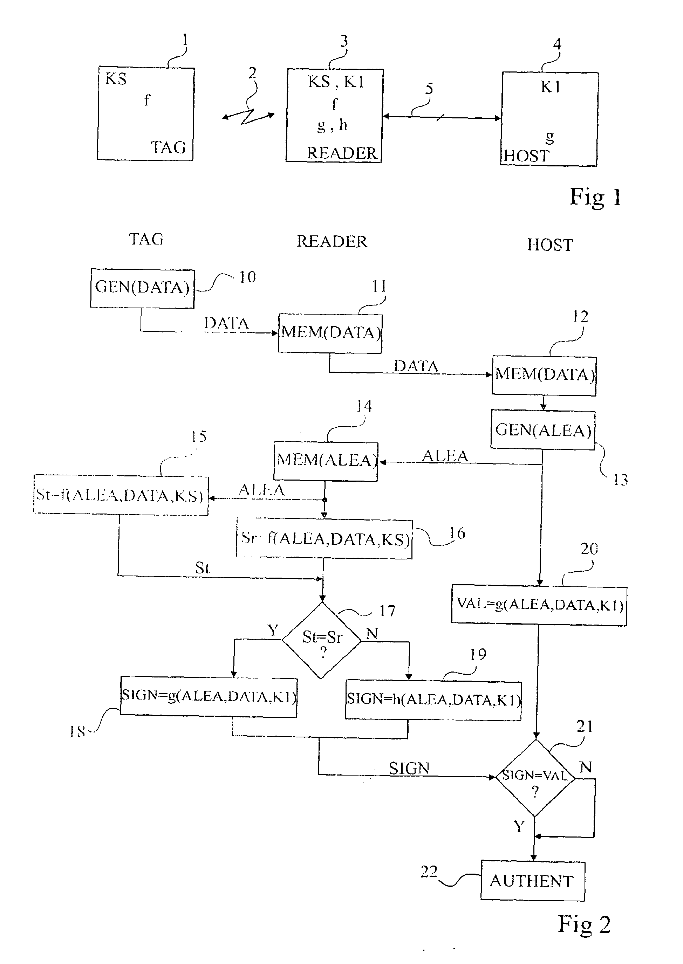

La figure 1 représente, de façon très schématique et sous forme de blocs, un système du type auquel s'applique la présente invention selon ce premier aspect. Une étiquette électronique 1 (TAG) appartenant par exemple à la famille des transpondeurs électromagnétiques est portée par un produit (non représenté) que l'on souhaite authentifier. Dans le cas d'une étiquette de type transpondeur électromagnétique, celle-ci peut communiquer sans contact et sans fil (liaison radiofréquence 2) avec un lecteur 3 (READER) ou coupleur radiofréquence dont une fonction classique est de servir d'interface électrique entre l'étiquette électronique 1 et un serveur 4 (HOST) chargé d'exécuter l'application une fois l'étiquette électronique authentifiée. Le lecteur ou coupleur 3 communique avec le serveur 4, par exemple, par une liaison filaire 5.

Dans un exemple d'application aux cartouches d'encre pour imprimante, l'étiquette 1 est constituée d'une puce de circuit intégré fixée (par exemple, collée) ou incluse dans le boîtier de la cartouche d'encre. Le lecteur 3 est constitué d'un coupleur radiofréquence dont est équipée l'imprimante et qui communique avec un microcontrôleur constitué par le serveur 4. Le serveur 4 est, par exemple, inclus dans les circuits de commande de l'imprimante ou déporté dans un ordinateur auquel celle-ci est connectée.

L'authentification de la cartouche sert notamment à empêcher un piratage de la liaison 5 qui aurait pour conséquence de faire accepter par l'imprimante n'importe quelle cartouche. Selon l'invention, on prévoit une phase d'authentification entre l'étiquette 1 et lecteur 3, puis une transmission de cette authentification vers le serveur 4.

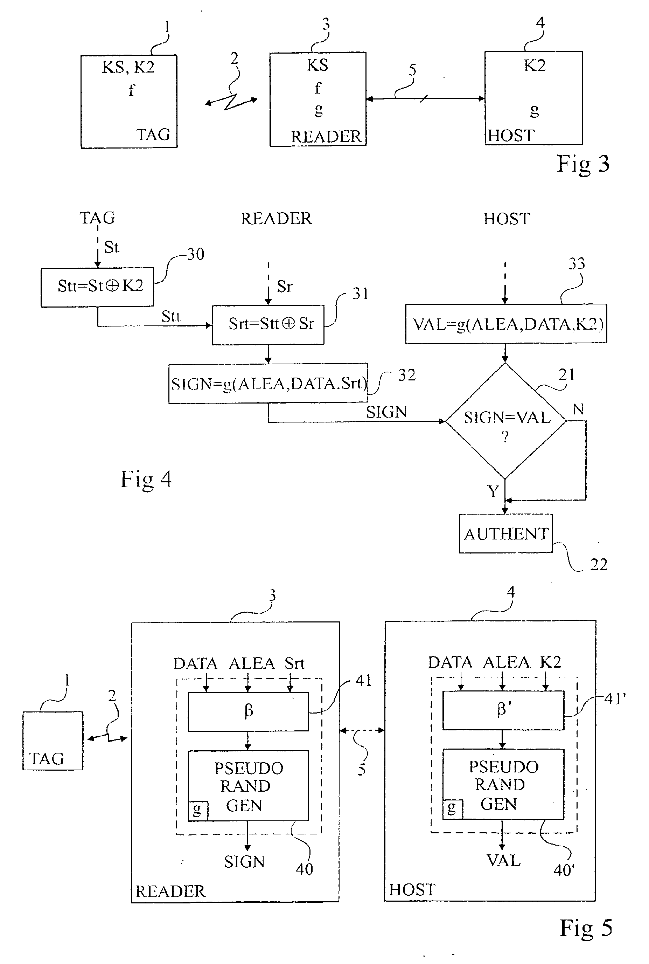

Selon l'invention, la transmission de l'authentification du lecteur 3 au serveur 4 s'effectue selon une procédure sécurisée qui sera décrite ci-après en relation avec la figure 2.

Pour la mise en oeuvre de l'invention selon son premier aspect illustré par les figures 1 et 2, l'étiquette électronique 1 et le lecteur 3 comportent ou intègrent une clé secrète KS connue des deux. Selon ce premier aspect, le lecteur 3 est dédié à un type d'étiquette 1 (par exemple, un type de cartouche d'imprimante).

Comme l'illustre la figure 1, l'étiquette 1 et le lecteur 3 possèdent également une fonction f commune de chiffrement, comme on le verra par la suite en relation avec la figure 2.

Le lecteur 3 et le microcontrôleur 4 possèdent ou intègrent chacun une clé commune K1 ainsi qu'une fonction g de chiffrement. Selon ce mode de réalisation, le lecteur 3 contient également une fonction h pour coder une absence d'authentification.

Une caractéristique de l'invention est de différencier, dans la transmission entre le lecteur 3 et le serveur 4, la fonction de codage ou de chiffrement mise en oeuvre selon que l'authentification opérée par le lecteur 3 est positive ou non. Ainsi, on ne se contente pas de transmettre au serveur 4 qu'on est en présence d'une authentification correcte et ne rien transmettre en l'absence d'authentification. On transmet toujours quelque chose, mais le serveur 4 ne l'interprète que s'il s'agit d'une authentification positive.

Ce qui est illustré en figure 1 par une différenciation de fonction (g et h) doit s'entendre soit d'une différenciation de la fonction codant une même donnée résultat comme cela sera exposé par la suite en relation avec la figure 2, soit d'une même fonction codant deux données différentes selon le résultat de l'authentification.

Cette transmission entre le lecteur 3 et le serveur 4 est indépendante de la transmission entre l'étiquette 1 et le lecteur 3, en ce sens que le serveur 4 ignore à la fois la clé KS partagée entre le lecteur et l'étiquette, et la fonction f de chiffrement mise en oeuvre dans la transmission entre ces deux éléments.

La figure 2 illustre, sous forme d'organigramme, un mode de mise en oeuvre de l'invention selon son premier aspect. En figure 2, les étapes du procédé illustré par l'organigramme ont été réparties dans trois colonnes TAG, READER et HOST selon qu'elles sont effectuées par l'étiquette électronique, par le lecteur ou par le serveur.

La première étape (bloc 10, GEN(DATA)) du procédé d'authentification de l'invention consiste en la génération, par l'étiquette électronique (TAG), d'un message de données DATA à transmettre pour authentification. Ce message DATA contient, par exemple, un identifiant du produit portant l'étiquette électronique (par exemple, le numéro de série et/ou le type de cartouche d'encre). La génération de cet identifiant par l'étiquette électronique est, par exemple et de façon classique, provoquée par l'alimentation de cette étiquette lorsqu'elle entre dans le champ du lecteur 3. Le fonctionnement d'une étiquette de type transporteur électromagnétique est parfaitement connu et ne fait pas l'objet de l'invention. Brièvement, l'alimentation du circuit intégré de l'étiquette (ou une commande spécifique reçue du lecteur) provoque l'émission, par rétromodulation de la porteuse de téléalimentation, du message DATA.

Lorsqu'il reçoit les données, le lecteur (READER) qui possède un démodulateur adapté au type de transpondeur, mémorise (bloc 11, MEM(DATA)) le message transmis. Par ailleurs, le lecteur communique les données DATA au serveur 4 qui lui-même les mémorise (bloc 12, MEM(DATA)).

La transmission exposée ci-dessus ne constitue pas proprement dit une authentification. C'est simplement la transmission d'un identifiant de l'étiquette électronique au serveur (HOST). Avant d'autoriser la poursuite de l'application, le serveur doit s'assurer que l'étiquette appartient à un produit authentique. Il initie donc la procédure d'authentification proprement dite.

Selon l'invention, le serveur génère (bloc 13, GEN(ALEA)) un nombre aléatoire ou pseudoaléatoire ALEA qu'il mémorise et communique au lecteur 3. Le lecteur 3 mémorise (bloc 14, MEM(ALEA)) le nombre ALEA et le transmet à l'étiquette électronique 1.

Le circuit intégré de l'étiquette 1 calcule alors (bloc 15, St=f(ALEA, DATA, KS)) une première signature St en utilisant la fonction algorithmique f et comme opérandes les grandeurs ALEA, DATA et KS. En d'autres termes, l'étiquette électronique calcule sa signature St qu'elle transmet au lecteur 3.

En parallèle (ou après avoir reçu la signature St de l'étiquette 1), le lecteur 3 calcule (bloc 16, Sr=f(ALEA, DATA, KS)) une grandeur Sr en appliquant la même fonction algorithmique f aux données ALEA, DATA et KS qu'il contient. On voit ici apparaître le rôle de la clé KS et de la fonction f communes à l'étiquette 1 et au lecteur 3 qui est de permettre une authentification chiffrée de l'étiquette par le lecteur.

Le lecteur 3 effectue ensuite un test de cohérence (bloc 17, St=Sr?) entre la grandeur Sr qu'il a calculé et la signature St transmise par l'étiquette électronique.

A ce stade du procédé d'authentification, l'invention prévoit, de façon caractéristique, de ne pas transmettre le résultat (Y ou N) de l'authentification en clair (c'est-à-dire de façon visible) au serveur. Selon l'invention, on chiffre l'authentification qu'elle soit positive ou négative.

Dans l'exemple représenté, le lecteur calcule une deuxième signature SIGN qui est différente selon le résultat du test 17. Si le test 17 a validé (Y) l'authentification de l'étiquette 1, on calcule (bloc 18, SIGN=g(ALEA, DATA, K1)) la signature SIGN en appliquant la fonction algorithmique g aux grandeurs ALEA, DATA et K1. En cas d'authentification négative, le lecteur 3 calcule (bloc 19, SIGN=h(ALEA, DATA, K1)) la signature SIGN en appliquant la fonction h aux mêmes grandeurs.

La signature SIGN ainsi calculée est alors transmise au serveur exploitant l'authentification. Le serveur calcule (bloc 20, VAL=g(ALEA, DATA, K1)) au préalable ou après réception de la signature SIGN, une grandeur de validation VAL correspondant à l'application de la fonction g aux grandeurs ALEA, DATA et K1 qu'il connaît. On voit apparaître ici le rôle de la clé secrète K1, connue du lecteur et du microcontrôleur et de la fonction g qu'ils partagent.

Le serveur compare (bloc 21, SIGN=VAL?) la signature SIGN reçue du lecteur à la valeur de validation VAL qu'il a calculé. Le résultat Y ou N de ce test authentifie ou non l'étiquette électronique 1.

Ce résultat est alors exploité (bloc 22, AUTHENT) par les procédures classiques qui suivent une authentification, qui ne font pas en elles-mêmes l'objet de l'invention.

Un avantage de la présente invention est qu'en codant aussi bien l'authentification positive que l'authentification négative côté lecteur 3, on empêche un pirate de tirer profit d'un espionnage des communications sur la liaison 5 (figure 1). En effet, celui-ci observera dans tous les cas un message que l'authentification soit ou non positive.

Un autre avantage de l'invention est que l'authentification mise en oeuvre entre le lecteur et l'étiquette électronique est indépendante du serveur, plus précisément du microcontrôleur 4, exploitant les résultats de l'authentification et contrôlant le déroulement de l'application.

Les données DATA transmises peuvent être quelconques pourvu qu'elles permettent la mise en oeuvre du procédé d'authentification décrit. Par exemple, le mot de données DATA est composé d'une partie de données fixes liées à l'étiquette et d'une partie de données variables. La partie de donnée fixe est, par exemple, un numéro unique propre à chaque étiquette. La partie variable correspond, par exemple, au résultat d'un compteur décrémentiel totalisant le nombre d'authentifications effectuées. Un tel mode de réalisation garantit qu'en utilisation normale il ne puisse pas y avoir plusieurs authentifications avec la même donnée, ce qui améliore la fiabilité du système.

Le nombre aléatoire ALEA généré par le serveur pourra être un nombre pseudoaléatoire utilisant une donnée comme graine. Par exemple, ce nombre pseudoaléatoire pourra utiliser une partie de la donnée DATA comme graine. Par exemple, on peut sauvegarder la valeur de l'état courant en sortie du générateur pseudoaléatoire, lors de l'extinction du système, pour utiliser cette valeur comme graine à l'utilisation suivante. Toutefois, idéalement, la graine est issue d'une grandeur "analogique", par exemple, un bruit thermique dans une résistance.

La figure 3 représente, de façon très schématique et sous forme de blocs, un système à étiquette électronique, lecteur et serveur selon le deuxième aspect de l'invention. Cette figure est à rapprocher de la figure 1 et seules les différences par rapport à cette figure 1 seront exposées.

Selon ce deuxième aspect de l'invention, on cherche à pouvoir individualiser les clés KS contenues dans chacune des étiquettes électroniques, donc dans chacun des produits à authentifier. Une telle individualisation requiert que ces clés soient écrites dans les étiquettes électroniques, par exemple et de façon préférentielle, lors de la première utilisation du produit qui les porte.

Ainsi, dans le mode de réalisation illustré par la figure 3, l'étiquette électronique 1 et le lecteur 3 partagent la clé KS et la fonction f comme dans le mode de réalisation précédent. Une différence par rapport à ce mode de réalisation précédent est que le lecteur 3 et le serveur 4 ne partagent que la fonction g. De plus, l'étiquette 1 et le serveur 4 partagent quant à eux une deuxième clé K2 qui est inscrite dans l'étiquette électronique lors de sa première utilisation associée au serveur 4.

Dans l'exemple d'application aux cartouches d'imprimante, cela revient à dire que, lors de la mise en place d'une nouvelle cartouche dans une imprimante donnée, le microcontrôleur associé à cette imprimante fournira à l'étiquette électronique de la cartouche une clé K2 générée, de préférence de façon aléatoire, et stockée dans l'étiquette électronique.

Lors de l'authentification de cette étiquette électronique, par exemple à chaque utilisation, le procédé débute comme le procédé exposé en relation avec la figure 2 jusqu'à l'étape 15 de calcul d'une signature intermédiaire St côté étiquette électronique.

La figure 4 représente la suite du procédé d'authentification selon un mode de mise en oeuvre de ce deuxième aspect de l'invention. Côté étiquette 1 (TAG), la donnée de départ est donc la signature intermédiaire St (St=f(ALEA, DATA, KS)). Côté lecteur 3 (READER), celui-ci a calculé une grandeur intermédiaire correspondante Sr (Sr=f(ALEA, DATA, KS)).

Selon ce deuxième mode de mise en oeuvre, l'étiquette électronique calcule (bloc 30, Stt=St+K2) la première signature Stt comme correspondant à une combinaison de type OU-Exclusif (XOR) de la signature intermédiaire St avec la clé K2. Cette signature Stt, chiffrée par la clé K2, est transmise au lecteur 3. De son côté, ce lecteur 3 calcule (bloc 31, Srt=Stt+Sr) une combinaison Srt de type OU-Exclusif de la première signature Stt avec la grandeur intermédiaire Sr qu'il a calculé précédemment. Si l'étiquette est authentique (c'est-à-dire contient les bonnes clés KS et K2 et la bonne fonction f), la combinaison Srt est égale à la clé K2 (Sr=St). Cette combinaison Srt sert au lecteur 3 pour calculer (bloc 32, SIGN=g(ALEA, DATA, Srt)) la deuxième signature SIGN en appliquant la fonction g aux opérandes ALEA, DATA et Srt. Cette signature SIGN est alors transmise au serveur 4 (HOST).

On notera ici une autre différence par rapport au premier mode de mise en oeuvre qui est que le lecteur ne possède pas à proprement parler de fonction d'authentification négative (fonction h, figures 1 et 2). La différenciation entre une authentification et une absence d'authentification provient ici de la prise en compte de la grandeur Srt dans l'application de la fonction g. Cette variante, qui est nécessaire dans le mode de réalisation de la figure 4, pourra être mise en oeuvre de façon alternative dans le mode de réalisation de la figure 2 en utilisant comme opérande à la fonction g, le résultat positif ou négatif du test du bloc 17.

En revenant au mode de réalisation de la figure 4, le serveur vérifie l'authenticité de l'étiquette électronique 1 en comparant (bloc 31, SIGN=VAL?) la signature SIGN reçue du lecteur 3 à une grandeur de validation VAL calculée (bloc 33, VAL=g(ALEA, DATA, K2)) en appliquant la fonction g aux grandeurs ALEA, DATA et K2. Si les grandeurs SIGN et VAL sont identiques, cela signifie que l'étiquette électronique possède bien, non seulement la fonction f du lecteur 3, mais également la clé K2 inscrite par le serveur 4 dans l'étiquette 1 lors de sa première utilisation. Dans le cas contraire, le serveur 4 peut mettre en oeuvre les procédures d'absence d'authentification.

Un avantage de ce mode de mise en oeuvre est qu'il ne nécessite pas, côté étiquette électronique 1, de stocker la clé K2 dès la fabrication. Cela permet d'individualiser les produits à authentifier au moment de leur première utilisation par un appareil donné.

Un autre avantage de ce mode de réalisation est que si la fonction g parvient à être cassée, c'est-à-dire découverte par un pirate, malgré les précautions prises, le produit portant l'étiquette électronique 1 ne pourra cependant pas être utilisé sur un autre appareil (plus précisément avec un autre microcontrôleur 4), dans la mesure où la clé K2 sera alors inconnue de cet autre appareil.

La contrainte à respecter pour la mise en oeuvre de l'invention selon son deuxième aspect est l'emploi d'une fonction de type OU-Exclusif dans les fonctions de combinaison (blocs 30 et 31).

Bien entendu, les modes de réalisation des figures 1, 2 et 3, 4 peuvent être combinés. Dans ce cas, les grandeurs SIGN (bloc 32, figure 4) et VAL (bloc 33, figure 4) sont fonction également de la clé K1, connue seulement du lecteur et du serveur, considérée alors comme une troisième clé.

La figure 5 illustre un mode de réalisation préféré d'une fonction de codage ou chiffrement (g) entre lecteur et serveur selon la présente invention. La figure 5 est à rapprocher des figures 1 et 3 en ce qu'elle représente, de façon schématique et sous forme de blocs, une étiquette électronique 1, un lecteur 3 et un serveur 4.

Selon ce mode de réalisation, le lecteur 3 et le serveur 4 comportent chacun un générateur pseudoaléatoire (PSEUDO RAND GEN) 40, respectivement 40', correspondant à la fonction g. Les deux générateurs 40 et 40' sont identiques en ce sens que, pour une même graine donnée, ils fournissent une même valeur en sortie. En d'autres termes, les fonctions de génération pseudoaléatoire des deux blocs 40 et 40' sont les mêmes.

Selon l'invention, les générateurs 40 et 40' fournissent respectivement, côté lecteur 3 et côté serveur 4, les grandeurs SIGN et VAL, c'est-à-dire les grandeurs permettant au serveur de valider l'authentification réalisée par le lecteur.

Dans chaque générateur pseudoaléatoire, on utilise une graine (B, bloc 41 et 41') fonction de différentes grandeurs utilisées dans le processus d'authentification.

Selon l'invention, côté lecteur 3, la graine B prend en compte les grandeurs DATA, ALEA et Srt (en variante la grandeur Sr dans la mise en oeuvre de la figure 2). Côté serveur 4, la graine B' prend en compte les grandeurs DATA, ALEA et K2 (en variante, la grandeur K1 dans la mise en oeuvre de la figure 2). Les graines B et B' sont, par exemple, obtenues par concaténation des grandeurs prises en compte ou par une fonction plus complexe.

Selon l'invention, les deux générateurs pseudoaléatoires 40 et 40' sont donc initialisés avec une même graine si l'authentification est correcte.

Dans le mode de réalisation de la figure 4, la valeur Srt sera, en cas d'authentification négative, différente de la clé K2.

Dans le mode de réalisation de la figure 2, si l'authentification faite par le lecteur 3 (test 17) est incorrecte, le générateur 40 est initialisé avec une grandeur différente que celle initialisant le générateur 40'. Pour cela, le résultat binaire (valeur 0 ou 1) du test 17 participe à la graine B. Côté serveur, la valeur (par exemple, 1) choisie arbitrairement pour indiquer une authentification correcte participe à la graine B'. On notera qu'ici la fonction g du lecteur 3 sera la même que l'authentification soit positive ou négative.

Dans tous les cas, cela permet bien de masquer l'authentification en transmettant à la fois une authentification positive et une authentification négative entre le lecteur et le serveur.

Un avantage du mode de réalisation de la figure 5 est que sa mise en oeuvre est particulièrement peu coûteuse et simple, tout en offrant une sécurité optimale contre les éventuels piratages.

La fréquence des authentifications dépend de l'application. Par exemple, pour une imprimante, une authentification pourra être déclenchée à chaque utilisation (à chaque impression), à chaque mise en service (allumage), à chaque détection de changement de cartouche et/ou périodiquement. Pour une machine à boissons, l'authentification pourra être mise en oeuvre après chaque intervention de remplacement d'une recharge en produit, détectée de façon classique.

Bien entendu, la présente invention est susceptible de diverses variantes et modifications qui apparaîtront à l'homme de l'art. En particulier, le choix des fonctions de génération pseudoaléatoires ou plus généralement des fonctions algorithmiques mises en oeuvre dans les différents échanges est à la portée de l'homme du métier à partir des indications fonctionnelles données ci-dessus, de l'application, et des fonctions algorithmiques et de génération pseudoaléatoire classiques dont il dispose. Par ailleurs, les tailles (nombre de bits) des grandeurs numériques utilisées seront choisies, de façon classique, notamment en fonction de la sécurité souhaitée.

De plus, l'exploitation des résultats de l'authentification ne fait pas l'objet de la présente invention et pourra donc être quelconque selon l'application.

En outre, les processus d'authentification peuvent être mis en oeuvre, côté lecteur 3 et côté serveur 4, soit de façon logicielle au moyen d'un microcontrôleur, soit en logique câblée. Toutefois, côté étiquette électronique 1, on notera que l'invention, sans exclure une mise en oeuvre logicielle par un microcontrôleur, s'applique préférentiellement à une réalisation en logique câblée, c'est-à-dire d'une étiquette peu coûteuse.

Enfin, l'étiquette électronique comprenant un circuit intégré pour la mise en oeuvre de l'invention pourra être un élément rapporté sur le produit (par exemple, recharge) à authentifier, ou inclus dans celui-ci (par exemple, inclus dans le boîtier du produit).

## Revendications

1. Procédé d'authentification d'une étiquette électronique (1) par un serveur (4) communiquant avec cette étiquette par l'intermédiaire d'un lecteur (3), **caractérisé en ce qu'**il consiste :
à calculer, côté étiquette (1), une première signature numérique (St, Stt) à l'aide d'au moins une première fonction (f) partagée par l'étiquette et le lecteur, en prenant en compte au moins une première clé secrète (KS) connue seulement de l'étiquette électronique et du lecteur ;
à transmettre la première signature au lecteur ;
à calculer, côté lecteur (3), une deuxième signature numérique (SIGN) à l'aide d'au moins une deuxième fonction (g), différente de la première fonction et partagée par le lecteur et le serveur, en tenant compte de la première signature ;
à transmettre la deuxième signature (SIGN) au serveur ; et
à vérifier, côté serveur (4), la cohérence entre la deuxième signature et une grandeur de validation (VAL) calculée à partir de ladite deuxième fonction (g) et d'une deuxième clé secrète (K1, K2) connue du serveur et d'un seul élément choisi parmi l'étiquette et le lecteur.

2. Procédé selon la revendication 1, **caractérisé en ce que** la deuxième clé secrète (K1) est connue seulement du lecteur (3) et du serveur (4), cette deuxième clé étant prise en compte dans le calcul, par le lecteur, de la deuxième signature (SIGN) transmise au serveur.

3. Procédé selon la revendication 1, **caractérisé en ce que** la deuxième clé secrète (K2) est connue seulement de l'étiquette électronique (1) et du serveur (4) et est mémorisée dans l'étiquette lors d'une première utilisation associée au serveur.

4. Procédé selon la revendication 3, **caractérisé en ce qu'**il consiste à utiliser, pour les calculs de la deuxième signature (SIGN) et de la grandeur de validation (VAL), une troisième clé (K1) connue seulement du lecteur (3) et du serveur (4).

5. Procédé selon l'une quelconque des revendications 1 à 4, **caractérisé en ce qu'**il comprend les étapes successives suivantes :
extraire de l'étiquette électronique (1) des données (DATA) à transmettre au serveur (4) ;
transmettre ces données au serveur (4) par l'intermédiaire du lecteur (3), en mémorisant ces données côté serveur et côté lecteur ;
générer, côté serveur (4), un nombre aléatoire ou pseudoaléatoire (ALEA), et le transmettre à l'étiquette (1) par l'intermédiaire du lecteur, en mémorisant ce nombre (ALEA) côté serveur, côté lecteur et côté étiquette ;
calculer, côté étiquette électronique (1), une signature intermédiaire (St) par application de ladite première fonction (t) avec comme opérandes ledit nombre (ALEA), lesdites données (DATA) et ladite première clé secrète (KS) ; et
côté lecteur (3), calculer une grandeur intermédiaire (Sr) par application de la première fonction (f) avec comme opérandes ledit nombre (ALEA), lesdites données (DATA) et ladite première clé secrète (KS).

6. Procédé selon la revendication 5 dans son rattachement à la revendication 2, ladite grandeur intermédiaire constituant ladite première signature (St), **caractérisé en ce qu'**il comporte, côté lecteur (3), les étapes suivantes :
comparer ladite première signature (St) à ladite grandeur intermédiaire (Sr) calculée par le lecteur ; et
calculer ladite deuxième signature (SIGN) en prenant en compte ledit nombre (ALEA), lesdites données (DATA), ladite deuxième clé secrète (K1) et le résultat de la comparaison précédente.

7. Procédé selon la revendication 6, **caractérisé en ce que** le calcul de la deuxième signature (SIGN) consiste à utiliser la deuxième fonction (g) ou une troisième fonction (h) selon le résultat de ladite comparaison.

8. Procédé selon la revendication 6, **caractérisé en ce que** le calcul de la deuxième signature (SIGN) consiste à utiliser la deuxième fonction (g) avec comme opérandes ledit nombre (ALEA), lesdites données (DATA), ladite deuxième clé secrète (K1) et le résultat de ladite comparaison.

9. Procédé selon la revendication 5 dans son rattachement à la revendication 3, **caractérisé en ce qu'**il comporte les étapes suivantes :
côté étiquette électronique (1), calculer (31) une première combinaison de type OU-Exclusif de ladite signature intermédiaire (St) avec ladite deuxième clé secrète (K2), pour obtenir ladite première signature (Stt) à transmettre au lecteur (3) ; et
côté lecteur (3) :
calculer (31) une deuxième combinaison (Srt) de type OU-Exclusif de la première signature reçue (Stt) avec ladite grandeur intermédiaire (Sr) ; et
calculer ladite deuxième signature (SIGN) par application de ladite deuxième fonction (g) avec comme opérandes le résultat de la deuxième combinaison, ledit nombre (ALEA) et desdites données (DATA).

10. Procédé selon l'une quelconque des revendications 1 à 9, **caractérisé en ce que** ladite deuxième fonction (g) est une fonction de génération d'un nombre pseudoaléatoire, commune au lecteur (3) et au serveur (4).

11. Procédé selon la revendication 10 dans son rattachement à la revendication 9, **caractérisé en ce que** ladite fonction de génération pseudoaléatoire utilise comme graines (B, B') lesdites données (DATA), ledit nombre (ALEA) et, respectivement côté lecteur et côté serveur, ladite deuxième combinaison de type OU-Exclusif (Srt) et ladite deuxième clé secrète (K2).

12. Procédé selon l'une quelconque des revendications 1 à 11, **caractérisé en ce que** ladite étiquette électronique (1) est un transpondeur électromagnétique.

13. Système d'authentification d'une étiquette électronique, comportant :
au moins une étiquette électronique (1) ;
au moins un lecteur (3) apte à lire des information contenues dans l'étiquette électronique ; et
au moins un serveur informatique (4),
dans lequel l'étiquette, le lecteur et le serveur sont adaptés pour mettre en oeuvre le procédé selon l'une quelconque des revendications 1 à 12.

14. Etiquette électronique (1) d'un système selon la revendication 13, comportant un circuit intégré et des moyens de mémorisation de ladite première clé secrète (KS) et d'exécution de ladite première fonction algorithmique (f).

15. Lecteur (3) d'étiquette électronique (1) d'un système selon la revendication 13.

16. Lecteur selon la revendication 15 dans son rattachement au procédé selon la revendication 10 ou 11, comportant un générateur pseudoaléatoire (40) propre à fournir ladite deuxième signature (SIGN).

17. Microcontrôleur (4) d'authentification d'une étiquette électronique (1), faisant partie d'un serveur d'un système selon la revendication 13.

18. Microcontrôleur selon la revendication 17 dans son rattachement au procédé selon la revendication 10 ou 11, comportant un générateur pseudoaléatoire (40') propre à fournir ladite grandeur de validation (VAL).

## Claims

1. A method for authenticating an electronic tag (1) by a host (4) communicating with said tag through a reader (3), **characterized in that** it comprises:
calculating, on the tag side (1), a first digital signature (St, Stt) by means of at least one first function (f) shared by the tag and the reader, taking into account at least one first secret key (KS) known by the electronic tag and the reader only;
transmitting the first signature to the reader;
calculating, on the reader side (3), a second digital signature (SIGN) by means of at least one second function (g), different from the first function and shared by the reader and the host, taking the first signature into account;
transmitting the second signature (SIGN) to the host; and
checking, on the host side (4), the coherence between the second signature and a validation value (VAL) calculated from said second function (g) and a second secret key (K1, K2) known by the host and by a single element selected from among the tag and the reader.

2. The method of claim 1, **characterized in that** the second secret key (K1) is known by the reader (3) and the host (4) only, this second key being taken into account in the calculation, by the reader, of the second signature (SIGN) transmitted to the host.

3. The method of claim 1, **characterized in that** the second secret key (K2) is known by the electronic tag (1) and the host (4) only and is stored in the tag upon a first use with the host.

4. The method of claim 3, **characterized in that** it consists of using a third key (K1) known by the reader (3) and the host (4) only for the calculations of the second signature (SIGN) and of the validation value (VAL).

5. The method of any of claims 1 to 4, **characterized in that** it comprises the successive steps of:
extracting from the electronic tag (1) data (DATA) to be transmitted to the host (4);
transmitting said data to the host (4) via the reader (3), while storing said data on the host side and on the reader side;
generating, on the host (4) side, a random or pseudo-random number (ALEA) and transmitting it to the tag (1) via the reader, while storing this number (ALEA) on the host side, on the reader side, and on the tag side;
calculating, on the electronic tag (1) side, an intermediary signature (St) by application of said first function (f) with as operands said number (ALEA), said data (DATA), and said first secret key (KS); and
on the reader (3) side, calculating an intermediary value (Sr) by application of the first function (f) with as operands said number (ALEA), said data (DATA) and said first secret key (KS).

6. The method of claim 5, as dependent upon claim 2, said intermediary value forming said first signature (St), and **characterized in that** it comprises, on the reader (3) side, the steps of:
comparing said first signature (St) to said intermediary value (Sr) calculated by the reader; and
calculating said second signature (SIGN) by taking into account said number (ALEA), said data (DATA), said second secret key (K1) and the result of the preceding comparison.

7. The method of claim 6, **characterized in that** the calculation of the second signature (SIGN) consists of using the second function (g) or a third function (h) according to the result of said comparison.

8. The method of claim 6, **characterized in that** the calculation of the second signature (SIGN) consists of using the second function (g) with as operands said number (ALEA), said data (DATA), said second secret key (K1) and the result of said comparison.

9. The method of claim 5, as dependent upon claim 3, **characterized in that** it comprises the steps of:
on the electronic tag (1) side, calculating (31) a first combination of XOR type of said intermediary signature (St) with said second secret key (K2), to obtain said first signature (Stt) to be transmitted to the reader (3); and
on the reader (3) side:
calculating (31) a second combination (Srt) of XOR type of the first received signature (Stt) with said intermediary value (Sr); and
calculating said second signature (SIGN) by application of said second function (g) with as operands the result of the second combination, said number (ALEA) and said data (DATA).

10. The method of any of claims 1 to 9, **characterized in that** said second function (g) is a function of generation of a pseudo-random number, common to the reader (3) and to the host (4) .

11. The method 10, as dependent upon claim 9, **characterized in that** said pseudo-random generation function uses as seeds (B, B') said data (DATA), said number (ALEA) and, respectively on the reader side and on the host side, said second combination of XOR type (Srt) and said second secret key (K2).

12. The method of any of claims 1 to 11, **characterized in that** said electronic tag (1) is an electromagnetic transponder.

13. A system of authentication of an electronic tag comprising:
at least one electronic tag (1);
at least one reader (3) capable of reading information contained in the electronic tag; and
at least one host (4),
wherein the tag, the reader and the host are adapted for implementing the method of any of claims 1 to 12.

14. An electronic tag (1) of a system according to claim 13, comprising an integrated circuit and means for storing a first secret key (KS) and for executing a first algorithmic function (f).

15. A reader (3) of an electronic tag (1), of a system according to claim 13.

16. The reader of claim 15, as dependent of claim 10 or 11, comprising a pseudorandom generator (40) capable of providing said second signature (SIGN).

17. A microcontroller (4) of authentication of an electronic tag (1), being part of a host of a server according to claim 13.

18. The microcontroller of claim 17, as dependent of the method of claim 10 or 11, comprising a pseudorandom generator (40') capable of providing said validation value (VAL).

## Patentansprüche

1. Ein Verfahren zum Authentifizieren einer elektronischen Marke bzw. Tag (1) durch eine Zentraleinheit bzw. Host (4) die mit dem Tag über einen Leser (3) kommuniziert, **dadurch gekennzeichnet, dass** es Folgendes aufweist:
Berechnen auf der Tag-Seite (1), einer ersten digitalen Signatur (St, Stt) mittel wenigstens einer ersten Funktion (f) die geteilt bzw. gemeinsam genutzt wird durch das Tag und den Leser unter Berücksichtigung wenigstens eines ersten geheimen Schlüssels (secret key, KS) der dem elektronischen Tag und dem Leser nur bzw. ausschließlich bekannt ist;
Senden der ersten Signatur an den Leser;
Berechnen auf der Leserseite (3), einer zweiten Signatur (SIGN) mittels wenigstens einer zweiten Funktion (g), die unterschiedlich von der ersten Funktion ist und geteilt bzw. gemeinsam genutzt wird durch den Leser und den Host und zwar unter Berücksichtigung der ersten Signatur;
Senden der zweiten Signatur (SIGN) an den Host; und
Prüfen, auf der Host-Seite (4), der kohärent zwischen der zweiten Signatur und eines Validierungswertes bzw. einer Validierungsgröße (VAL) der berechnet wird aus der zweiten Funktion (g) und einem zweiten geheimen Schlüssel (K1, K2) der dem Host und einem einzelnem Element bekannt ist das ausgewählt wird zwischen dem Tag und dem Leser.

2. Verfahren nach Anspruch 1, **dadurch gekennzeichnet dass** der zweite geheime Schlüssel (K1) dem Leser (3) und dem Host (4) ausschließlich bekannt ist, wobei dieser zweite Schlüssel durch den Leser berücksichtigt wird bei der Berechnung der zweiten Signatur (SIGN), die an den Host gesendet wird.

3. Verfahren nach Anspruch 1, **dadurch gekennzeichnet, dass** der zweite geheime Schlüssel (K2) dem elektronischen Tag (1) und dem Host (4) ausschließlich bekannt ist, und in dem Tag gespeichert wird bis zu einer ersten Nutzung mit dem Host.

4. Verfahren nach Anspruch 3, **dadurch gekennzeichnet, dass** es aus Folgendem besteht: Nutzen eines dritten Schlüssel (K1), der dem Leser (3) und dem Host (4) ausschließlich bekannt ist für die Berechnungen der zweiten Signatur (SIGN) und des Validierungswertes bzw. der Validierungsgröße (VAL).

5. Verfahren nach irgendeinem der Ansprüche 1 bis 4, **dadurch gekennzeichnet, dass** es die folgenden aufeinanderfolgenden Schritte aufweist:
Extrahieren von dem elektronischen Tag (1), Daten (DATA), die an den Host (4) zu senden sind;
Senden der Daten an den Host (4) über den Leser (3), während die Daten auf der Host-Seite und auf der Leser-Seite gespeichert werden;
Erzeugen, auf der Host-(4)-Seite, einer zufälligen oder pseudo-zufälligen Zahl (ALEA) und deren Senden an das Tag (1) über den Leser, während diese Zahl (ALEA) auf der Host-Seite, auf der Leser-Seite und auf der Tag-Seite gespeichert wird;
Berechnen, auf der elektronischen Tag-(1)-Seite, einer intermediären Signatur (St) durch Anwendung der ersten Funktion (f) mit der Nummer (ALEA), den Daten (DATA) und dem ersten geheimen Schlüssel (KS) als Operanden; und
auf der Leser-(3)-Seite, Berechnen eines intermediären Wertes (Sr) durch Anwendung der ersten Funktion (f) mit der Nummer (ALEA), den Daten (DATA) und dem ersten geheimen Schlüssel (KS) als Operanden.

6. Verfahren nach Anspruch 5, wenn er von Anspruch 2 abhängt, wobei der intermediäre Wert die erste Signatur (St) bildet und **dadurch gekennzeichnet ist dass** es auf Leser-(3)-Seite die folgenden Schritte aufweist:
Vergleichen der ersten Signatur (St) mit dem durch den Leser berechneten intermediären Wert (Sr); und
Berechnen der zweiten Signatur (SIGN) unter Berücksichtigung der Nummer (ALEA), der Daten (DATA), des zweiten geheimen Schlüssels (K1) und des Ergebnisses des vorhergehenden Vergleichs.

7. Verfahren nach Anspruch 6, **dadurch gekennzeichnet, dass** die Berechnung der zweiten Signatur (SIGN) besteht aus dem Nutzen der zweiten Funktion (g) oder einer dritten Funktion (h) gemäß dem Ergebnis des Vergleichs.

8. Verfahren nach Anspruch 6, **dadurch gekennzeichnet, dass** die Berechnung der zweiten Signatur (SIGN) besteht aus dem Nutzen der zweiten Funktion (g) mit der Nummer (ALEA), den Daten (DATA), dem zweiten geheimen Schlüssel (K1) und dem Ergebnis des Vergleichs als Operanden.

9. Verfahren nach Anspruch 5, wenn er von Anspruch 3 abhängig ist, **dadurch gekennzeichnet, dass** es die folgenden Schritte aufweist:
auf der elektronischen Tag-(1)-Seite, Berechnen (31) einer ersten Kombination des Exklusiv-ODER bzw. X-OR Typs von der intermediären Signatur (St) mit dem zweiten geheimen Schlüssel (K2) um die erste Signatur (Stt), die an den Leser (3) zu senden ist, zu erlangen; und
auf der Leser-(3)-Seite:
Berechnen (31) einer zweiten Kombination (Srt) des X-OR Typs von der ersten empfangenen Signatur (Stt) mit dem intermediären Wert (Sr); und
Berechnen der zweiten Signatur (SIGN) durch Anwendung der zweiten Funktion (g) mit dem Ergebnis der zweiten Kombination, der Nummer (ALEA) und der Daten (DATA) als Operanden.

10. Verfahren nach irgendeinem der Ansprüche 1 bis 9, **dadurch gekennzeichnet dass** die zweite Funktion (g) eine Funktion des Erzeugens einer pseudo-zufälligen Zahl ist, die dem Leser (3) und dem Host (4) gemeinsam ist.

11. Verfahren nach Anspruch 10, wenn er von Anspruch 9 abhängig ist, **dadurch gekennzeichnet, dass** die Pseudo-Zufalls-Erzeugungs-Funktion als Samen (B, B') die Daten (DATA), die Zahl (ALEA) und entsprechend auf der Leserseite und auf der Host-Seite die zweite Kombination vom X-OR Typ (Srt) und dem zweiten geheimen Schlüssel (K2) nutzt.

12. Verfahren nach irgendeinem der Ansprüche 1 bis 11, **dadurch gekennzeichnet, dass** das elektronische Tag (1) ein elektromagnetischer Transponder ist.

13. Ein System der Authentisierung eines elektronischen Tags bzw. einer elektronischen Marke, das Folgendes aufweist:
wenigstens ein elektronisches Tag (1);
wenigstens einen Leser (3) der geeignet ist zum Lesen von Information, die in dem elektronischen Tag enthalten ist; und
wenigstens eine Zentraleinheit bzw. einen Host (4),
wobei das Tag, der Leser und der Host angepasst sind, zum Implementieren des Verfahrens nach irgendeinem der Ansprüche 1 bis 12.

14. Ein elektronisches Tag (1) von einem System gemäß Anspruch 13, das eine integrierte Schaltung und Mittel zum Speichern eines ersten geheimen Schlüssel (KS) und zum Ausführen einer ersten algorithmischen Funktion (f) aufweist.

15. Ein Leser (3) von einem elektronischen Tag (1) von einem System gemäß Anspruch 13.

16. Leser nach Anspruch 15, wenn er abhängig ist von Anspruch 10 oder 11, der einen Pseudo-Zufalls-Generator (40) aufweist, der geeignet ist zum Vorsehen der zweiten Signatur (SIGN).

17. Ein Mikro-Controller (4) zur Authentisierung von einem elektronischen Tag (1), und zwar als Teil von einem Host von einem Server gemäß Anspruch 13.

18. Mikro-Controller nach Anspruch 17, wenn er abhängig ist von dem Verfahren nach Anspruch 10 oder 11, der einem Pseudo-Zufalls-Generator (40') aufweist, der geeignet ist zum Vorsehen des Validierungswertes bzw. der Validierungsgröße (VAL).
